# EUROPÄISCHE PATENTANMELDUNG

(11) **EP 4 813 188 A1**
(43) Veröffentlichungstag der Anmeldung: **30.09.2026**
(21) Anmeldenummer: 26155881.1
(22) Anmeldetag: 03.02.2026
(51) Int. Cl.: A01B 76/00, A01B 69/04

(54) **AUTONOME LANDWIRTSCHAFTLICHE ARBEITSMASCHINE**

(30) Priorität: 26.03.2025 DE 102025111803
(71) Anmelder: CLAAS Tractor S.A.S., 78141 Vélizy-Villacoublay Cedex (FR)
(72) Erfinder: Monkenbusch, Robin, 33378 Rheda-Wiedenbrück (DE); Niggemeyer, Tobias, 33098 Paderborn (DE); Rusterholtz, Thiebaud, 91470 LIMOURS (FR)
(74) Vertreter: CLAAS Gruppe

(57) **Zusammenfassung**

Die vorliegende Erfindung betrifft eine autonome landwirtschaftliche Arbeitsmaschine (1) mit zumindest einer Adaptionsvorrichtung (3) zum Anschließen eines Anbaugerätes (2) an die Arbeitsmaschine (1) sowie mit einer mehrere Sensoren (24) umfassenden Sensoreinrichtung (4), die dazu eingerichtet ist, Daten (BD, PD) der autonomen Arbeitsmaschine (1) und des angeschlossenen Anbaugerätes (2), die Betriebsparameter der autonomen Arbeitsmaschine (1) und/oder des Anbaugerätes (2) umfassen, zu ermitteln und die Daten (BD, PD) einer Steuerungsvorrichtung (5) bereitzustellten, die zur Auswertung der von der Sensoreinrichtung (4) ermittelten Daten (BD, BD) eingerichtet ist, wobei die Steuerungsvorrichtung (5) eine Funktionskontrolleinheit (25) aufweist, welche dazu eingerichtet ist, einen jeweiligen Betriebszustand der autonomen Arbeitsmaschine (1) und/oder des Anbaugerätes (2) vor, während und nach einer Durchführung einer landwirtschaftlichen Arbeitsaufgabe (27) zu kontrollieren, wobei die Bestimmung des jeweiligen Betriebszustands auf einer Auswertung von Zustandsinformationen erfolgt, welche auf einer Analyse der von der Sensoreinrichtung (4) bereitgestellten Daten (BD, PD) vor, während und nach der Durchführung der landwirtschaftlichen Arbeitsaufgabe (27) basiert.

## Beschreibung

Die vorliegende Erfindung betrifft eine autonome landwirtschaftliche Arbeitsmaschine gemäß dem Oberbegriff des Anspruches 1.

Aus der DE 10 2022 110 130 A1 ist eine autonome landwirtschaftliche Arbeitsmaschine der eingangs genannten Art bekannt. Zum Betreiben der autonomen landwirtschaftlichen Arbeitsmaschine mit zumindest einer Adaptionsvorrichtung zum Anschließen eines Anbaugerätes an die Arbeitsmaschine ist vorgesehen, dass von einer mehrere Sensoren umfassenden Sensoreinrichtung Daten der autonomen Arbeitsmaschine und des angeschlossenen Anbaugerätes ermittelt werden. Die Daten umfassen Betriebsparameter der autonomen Arbeitsmaschine und/oder des Anbaugerätes, die von der Sensoreinrichtung einer Steuerungsvorrichtung zur Auswertung bereitgestellt werden. Die Steuerungsvorrichtung bestimmt auf der Basis der Auswertung der ermittelten Daten das Auftreten einer Unregelmäßigkeit, bei der es sich um ein defektes Arbeitsaggregat der Arbeitsmaschine, ein defektes Anbaugerät oder ein Hindernis auf einer abzufahrenden Route der Arbeitsmaschine handelt. Als Reaktion auf das Auftreten einer Unregelmäßigkeit wird die autonome Arbeitsmaschine im ersten Schritt unabhängig von der Art der Unregelmäßigkeit in einen sicheren Betriebszustand überführt, in welchem der Betrieb der autonomen Arbeitsmaschine unterbrochen ist. Im zweiten Schritt wird die Art der Unregelmäßigkeit bestimmt, um in Abhängigkeit von der identifizierten Unregelmäßigkeit eine Anweisung zum Überführen der autonomen Arbeitsmaschine aus dem sicheren Betriebszustand in einen normalen Betriebszustand zu erzeugen.

Ausgehend vom vorstehend genannten Stand der Technik liegt der Erfindung die Aufgabe zugrunde, eine autonome landwirtschaftliche Arbeitsmaschine der eingangs genannten Art weiterzubilden, welche sich durch eine erweiterte Überwachungsfunktion der autonomen Arbeitsmaschine und eines daran adaptierten Anbaugerätes auszeichnet.

Die vorstehende Aufgabe wird durch eine autonome landwirtschaftliche Arbeitsmaschine mit den Merkmalen des Anspruches 1 gelöst. Vorteilhafte Weiterbildungen sind Gegenstand der abhängigen Ansprüche.

Gemäß dem Anspruch 1 wird eine autonome landwirtschaftliche Arbeitsmaschine mit zumindest einer Adaptionsvorrichtung zum Anschließen eines Anbaugerätes an die Arbeitsmaschine vorgeschlagen. Die Arbeitsmaschine weist eine mehrere Sensoren umfassenden Sensoreinrichtung auf, die dazu eingerichtet ist, Daten der autonomen Arbeitsmaschine und des angeschlossenen Anbaugerätes, die Betriebsparameter der autonomen Arbeitsmaschine und/oder des Anbaugerätes umfassen, zu ermitteln und die Daten einer Steuerungsvorrichtung bereitzustellten, die zur Auswertung der von der Sensoreinrichtung ermittelten Daten eingerichtet ist. Erfindungsgemäß ist vorgesehen, dass die Steuerungsvorrichtung eine Funktionskontrolleinheit aufweist, welche dazu eingerichtet ist, einen jeweiligen Betriebszustand der autonomen Arbeitsmaschine und/oder des Anbaugerätes vor, während und nach einer Durchführung einer landwirtschaftlichen Arbeitsaufgabe zu kontrollieren, wobei die Bestimmung des jeweiligen Betriebszustands auf einer Auswertung von Zustandsinformationen erfolgt, welche auf einer Analyse der von der Sensoreinrichtung bereitgestellten Daten vor, während und nach der Durchführung der landwirtschaftlichen Arbeitsaufgabe basiert.

Der Erfindung liegt die Überlegung zugrunde, dass ein fehlerhafter oder irregulärer Betriebszustand, der zu einer Verhinderung der Aufnahme einer landwirtschaftlichen Arbeitsaufgabe, einer Unterbrechung während der Durchführung der landwirtschaftlichen Arbeitsaufgabe oder einer unsicheren Betriebssituation nach der Durchführung der landwirtschaftlichen Arbeitsaufgabe führt, zu einem frühestmöglichen Zeitpunkt erkannt wird. Dabei umfassen Zustandsinformationen zumindest die von der Sensoreinrichtung bereitgestellten Daten, die für das Anbaugerät, die zumindest eine Adaptionsvorrichtung und/oder das Anbaugerät verfügbar sind.

Die zumindest eine Adaptionsvorrichtung kann zum mechanischen, elektrischen, elektromechanischen, pneumatischen, hydraulischen und/oder kommunikativen Anschluss des Anbaugerätes ausgeführt und eingerichtet sein. Insbesondere können mehrere unterschiedliche Adaptionsvorrichtung vorgesehen sein, die dem Anschluss des Anbaugerätes dienen.

Bevorzugt kann die Funktionskontrolleinheit dazu eingerichtet sein, bei der Bestimmung des jeweiligen Betriebszustands Umgebungsdaten als Zustandsinformationen aus einer externen Datenquelle abzurufen und zu berücksichtigen. Umgebungsdaten sind unter anderem Wetterdaten, wie Niederschlagsmenge, Windrichtung und Windgeschwindigkeit, und/oder Daten zu Bodenverhältnissen, topografische Daten, wie eine Geländeneigung.

Insbesondere können die von der Sensoreinrichtung bereitgestellten Daten physikalische Daten und Bilddaten umfassen, die vor, während und nach der Durchführung der Arbeitsaufgabe generiert werden. Hierzu kann die Sensoreinrichtung mehrere unterschiedliche Sensoren umfassen, die zur Erfassung der physikalischen Daten und der Bilddaten ausgeführt und eingerichtet sind. Die Sensoren zur Erfassung der physikalischen Daten können beispielsweise als Drehmomentsensor, Drehzahlsensor, Schwingungssensor, Näherungssensor, Kraftsensor, Beschleunigungssensor, akustischer Sensor, Positionsortungssensor und/oder Feuchtigkeitssensor ausgeführt sein. Die Sensoren zur Erfassung der Bilddaten sind als optische Sensoren, vorzugsweise als Kameras, ausgeführt.

Die physikalischen Daten können aus der Gruppe Akustikdaten, Schwingungsdaten und/oder Drehmomentdaten, Durchsatzdaten, Druckdaten, Neigungswinkeldaten und/oder Bewegungsdaten der Arbeitsmaschine, der zumindest einen Adaptionsvorrichtung und/oder des Anbaugerätes sein, zu deren Erfassung ein Teil der Sensoren der Sensoreinrichtung eingerichtet und ausgeführt ist. Durchsatzdaten können Massenströme und/oder Volumenströme sein, die von Sensoren der Arbeitsmaschine und/oder des Anbaugerätes erfassbar sind.

Die Bilddaten können Aufnahmen der Arbeitsmaschine, der zumindest einen Adaptionsvorrichtung, des angeschlossenen Anbaugerätes sowie der Umgebung umfassen, welche ein Teil der Sensoren der Sensoreinrichtung vor, während und nach der Durchführung der Arbeitsaufgabe durch die Arbeitsmaschine generiert. Hierzu kann die Sensoreinrichtung zumindest eine Kamera umfassen, die zur Generierung von Bilddaten der Arbeitsmaschine, der zumindest einen Adaptionsvorrichtung, des angeschlossenen Anbaugerätes sowie der Umgebung ausgeführt und eingerichtet ist. Vorzugsweise umfasst die Sensoreinrichtung mehrere Kameras.

Bevorzugt kann die Funktionskontrolleinheit dazu eingerichtet sein, vor der Durchführung einer landwirtschaftlichen Arbeitsaufgabe eine Funktionsprüfung der Sensoren, der Arbeitsmaschine, der zumindest einen Adaptionsvorrichtung und des Anbaugerätes und/oder eine Überprüfung der Anschlusssituation des Anbaugerätes an die Adaptionsvorrichtung durchzuführen. Hierzu kann die Funktionskontrolleinheit dazu eingerichtet und programmiert sein, Statusabfragen an die Sensoren, an Arbeitsaggregate und/oder an eine oder mehrere Steuereinheiten der Arbeitsmaschine, der zumindest einen Adaptionsvorrichtung und/oder des Anbaugerätes zu senden. Statusabfragen können von der Funktionskontrolleinheit drahtgebunden über ein Bussystem und/oder drahtlos übertragen werden.

Gemäß einer Weiterbildung kann die Funktionskontrolleinheit dazu eingerichtet sein, eine Funktionsprüfung von Anschlüssen der zumindest einen Adaptionsvorrichtung, die als Hydraulikanschlüsse, Pneumatikanschlüsse, Elektroanschlüsse und/oder Kommunikationsanschlüsse ausgeführt sind, nach dem Anschluss des Anbaugerätes an die zumindest eine Adaptionsvorrichtung durchzuführen. Hierzu kann die Funktionskontrolleinheit dazu eingerichtet und programmiert sein, Steuerbefehle zu generieren, mit denen an die Hydraulikanschlüsse, Pneumatikanschlüsse, Elektroanschlüsse und/oder Kommunikationsanschlüsse angeschlossene Komponenten angesteuert werden. Alternativ oder zusätzlich können der Funktionskontrolleinheit von zumindest einem Sensor der Sensoreinrichtung Bilddaten der zumindest einen Adaptionsvorrichtung zur Auswertung bereitgestellt werden, welche die Anschlüsse der zumindest einen Adaptionsvorrichtung und deren Belegung wiedergegeben.

Insbesondere kann die Funktionskontrolleinheit dazu eingerichtet sein, während der Durchführung einer landwirtschaftlichen Arbeitsaufgabe die Einhaltung einer Betriebsposition des Anbaugerätes und von am Anbaugerät angeordneten Komponenten zu kontrollieren und/oder eine Kontrolle einer Bedienreihenfolge des Anbaugerätes und der am Anbaugerät angeordneten Komponenten durchzuführen.

Bevorzugt kann die Funktionskontrolleinheit dazu eingerichtet sein, die Betriebsposition und/oder die Bedienreihenfolge durch einen Abgleich mit in einer Speichereinheit hinterlegten Bildern und/oder Videosequenzen zu kontrollieren. Die Bilder und/oder Videosequenzen können hierzu eine Soll-Bedienposition und/oder eine Soll- Bedienreihenfolge wiedergeben. Auf diese Weise können beispielsweise Anbaugeräte kontrolliert werden, die sich vor einer Inbetriebnahme zur Durchführung der Arbeitsaufgabe in einer Transportstellung befinden. Die Transportstellung kann durch Klappen und/oder Falten einzelner Segmente des angeschlossenen Anbaugerätes eingenommen sein. Dies kann gleichermaßen für als Vorsatzgeräte zur Ernte von Pflanzen ausgeführte Anbaugeräte gelten wie für als Bodenbearbeitungsgeräte oder Geräte zur Ausbringung von Dünger oder Pflanzenschutzmitteln ausgebildete Anbaugeräte. Mittels der in der Speichereinheit hinterlegten Bilddaten und/oder Videosequenzen lässt sich durch Abgleich mit von der Sensoreinrichtung bereitgestellten aufgenommenen Bilddaten und/oder Videosequenzen kontrollieren, ob das Anbaugerät seine bestimmungsgemäße Betriebs- oder Arbeitsstellung als Betriebsposition eingenommen hat und während der Durchführung der landwirtschaftlichen Arbeitsaufgabe beibehält.

Gemäß einer Weiterbildung kann die Funktionskontrolleinheit dazu eingerichtet sein, nach Beendigung der Durchführung der landwirtschaftlichen Arbeitsaufgabe die Überführung der autonomen landwirtschaftlichen Arbeitsmaschine in einen sicheren Betriebszustand und die Einhaltung des sicheren Betriebszustands zu überwachen. Das Überführen in einen sicheren Betriebszustand kann das Ausheben des Anbaugerätes umfassen, um das Anbaugerät zum Boden zu beabstanden, das Überführen in seine Transportstellung, das Abschalten von Antriebsvorrichtungen zum Antreiben oder Betreiben von Arbeitsaggregaten der autonomen Arbeitsmaschine und/oder des Anbaugerätes und/oder das Bewegen der autonomen Arbeitsmaschine zu einer ausgewiesenen Position auf oder am Rand eines zu bearbeitenden Territoriums.

Bevorzugt kann die Funktionskontrolleinheit dazu eingerichtet sein, das Überführen der autonomen landwirtschaftlichen Arbeitsmaschine in den sicheren Betriebszustand und die Einhaltung des sicheren Betriebszustands durch einen Abgleich mit in der Speichereinheit hinterlegten Bildern und/oder Videosequenzen zu kontrollieren. Die Bilder und/oder Videosequenzen können hierzu einen sicheren Soll-Betriebszustand wiedergeben, der mit den von der Sensoreinrichtung bereitgestellten Bilddaten verglichen wird.

Insbesondere kann die Funktionskontrolleinheit dazu eingerichtet sein, die Arbeitsmaschine anzusteuern, um diese in eine Serviceposition oder eine Abholposition auf oder am Rand einer bearbeiteten oder zu bearbeitenden Fläche als sicherer Betriebszustand zu überführen.

Bevorzugt kann die Funktionskontrolleinheit dazu eingerichtet sein, betriebszustandsabhängig Warnhinweise auszugeben. Dabei ist unter betriebszustandsabhängig zu verstehen, dass vor, während oder nach der Durchführung der landwirtschaftlichen Arbeitsaufgabe ein durch die Funktionskontrolleinheit bestimmter Betriebszustand auftritt, der zu einer Verhinderung der Aufnahme der Durchführung einer landwirtschaftlichen Arbeitsaufgabe, einer Unterbrechung während der Durchführung der landwirtschaftlichen Arbeitsaufgabe oder einer unsicheren Betriebssituation nach der Durchführung der landwirtschaftlichen Arbeitsaufgabe führt.

Beispielsweise kann bei einer Detektion einer fehlerhaften Belegung von Anschlüssen an der zumindest einen Adaptionsvorrichtung bei der Überprüfung vor der Durchführung der landwirtschaftlichen Arbeitsaufgabe ein entsprechender Warnhinweis ausgegeben werden. Eine solche Fehlbelegung führt dazu, dass eine Aufnahme der Durchführung der landwirtschaftlichen Arbeitsaufgabe nicht möglich ist und/oder es zu Schäden an der Arbeitsmaschine, der zumindest einen Adaptionsvorrichtung und/oder dem Anbaugerät kommen kann.

Darüber hinaus kann der Warnhinweis Informationen umfassen, die eine Anweisung für eine Korrektur und/oder eine Anleitung für korrekte Belegung enthalten. Ein weiteres Beispiel kann die Detektion einer unvollständigen Einnahme der Betriebsstellung des Anbaugerätes sein. Ein während der Durchführung auftretender Betriebszustand, der zu einem Warnhinweis führt, kann beispielsweise ein Druckverlust im Hydrauliksystem oder im Pneumatiksystem sein. Ein weiteres Beispiel für einen während der Durchführung der landwirtschaftlichen Arbeitsaufgabe auftretenden Betriebszustand, der einen Warnhinweis generiert, ist das Lösen eines Anschlussschlauches oder einer Anschlussleitung. Generell kann ein Warnhinweis ausgeben werden, wenn einer der Sensoren der Sensoreinrichtung ausfällt.

Gemäß einer Weiterbildung kann die Funktionskontrolleinheit dazu eingerichtet sein, betriebszustandsunabhängig Wartungshinweise auszugeben, die auf der Auswertung der Zustandsinformationen basieren. Unter betriebszustandsunabhängig ist zu verstehen, dass alle Betriebssituationen vor, während und nach der Durchführung der landwirtschaftlichen Arbeitsaufgabe umfasst sind, in denen basierend auf der Auswertung der Zustandsdaten Wartungshinweise generiert werden können. Im Unterschied zu Warnhinweisen, die auf einen fehlerhaften oder irregulären Betriebszustand zurückgehen, welcher durch die Funktionskontrolleinheit detektiert wurde, stellen die Wartungshinweise Empfehlungen dar, um die Einsatzfähigkeit der Arbeitsmaschine, der zumindest einen Adaptionsvorrichtung und/oder des Anbaugerätes langfristig zu erhalten.

Beispielsweise können generierte Wartungshinweise einen Füllstand von Kraftstoffen, Hilfs- oder Betriebsstoffen und dergleichen mehr betreffen. Denkbar ist weiterhin eine Verschleißdetektion von Komponenten des Anbaugerätes, der zumindest einen Adaptionsvorrichtung und/oder der Arbeitsmaschine und damit verbundene Wartungshinweise. Insbesondere können dabei auch Umgebungsdaten als betriebszustandsunabhängig Zustandsdaten ausgewertet werden. Beispielhaft hierfür kann das Auftreten eines Wetterumschwungs genannt werden.

Die Ausgabe von betriebszustandsabhängigen Warnhinweisen bzw. betriebszustandsunabhängigen Wartungshinweise kann durch eine entfernte stationäre oder mobile Anzeigevorrichtung erfolgen. Hierzu kann die Anzeigevorrichtung mit der Steuerungsvorrichtung zur Datenübertragung verbunden sein.

Bevorzugt kann die Funktionskontrolleinheit dazu eingerichtet sein, betriebszustandsunabhängig Ablauffortschritte zu überwachen und zu dokumentieren. Dies ermöglicht eine spätere Auswertung der Abläufe von, während und nach der Durchführung der landwirtschaftlichen Arbeitsaufgabe. Des Weiteren können die erfassten und dokumentierten Ablauffortschritte an Dritte übermittelt werden. Dies kann beispielsweise zu Nachweis- und Abrechnungszwecken geschehen.

Weiter bevorzugt kann die Funktionskontrolleinheit ein Bildauswertungsmodul umfassen, welches dazu eingerichtet ist, die Bilddaten mittels eines Maschinenlernalgorithmus zu analysieren. Bevorzugt kann der Maschinenlernalgorithmus zumindest ein trainierbares neuronales Netzwerk zur Analyse der Bilddaten umfassen. Dies ist vorteilhaft, wenn die Betriebsposition und/oder die Bedienreihenfolge durch einen Abgleich mit in einer Speichereinheit hinterlegten Bildern und/oder Videosequenzen kontrolliert werden. Ebenfalls kann die Analyse von Bilddaten mittels des Maschinenlernalgorithmus zur Kontrolle bei der Überführung des Anbaugerätes in den sicheren Betriebszustand und zur Überwachung dessen Einhaltung verwendet werden. Die Einnahme des sicheren Betriebszustands kann gleichfalls durch einen Abgleich mit in der Speichereinheit hinterlegten Bildern und/oder Videosequenzen, die den sicheren Soll-Betriebszustand wiedergeben, kontrolliert werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine autonome landwirtschaftliche Arbeitsmaschine bei der Durchführung einer landwirtschaftlichen Arbeitsaufgabe;
- Fig. 2: schematisch und exemplarisch eine Teilansicht einer als Traktor ausgeführten autonomen Arbeitsmaschine, die mit einem als Ballenpresse ausgebildeten Anbaugerät verbunden ist; und
- Fig. 3: schematisch und exemplarisch eine Darstellung eines Frontbereichs einer Kabine der autonomen Arbeitsmaschine gemäß Fig. 2 mit Sensoren einer Sensoreinrichtung.

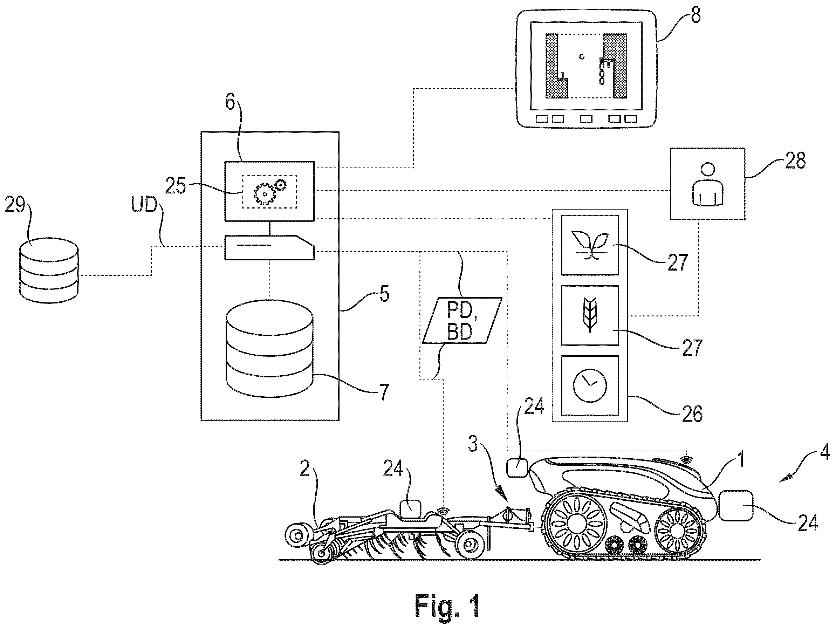

In Fig. 1 ist schematisch und exemplarisch eine autonome landwirtschaftliche Arbeitsmaschine 1 bei der Durchführung einer landwirtschaftlichen Arbeitsaufgabe 27, beispielsweise der Bodenbearbeitung, auf einem Feld dargestellt. Zur Durchführung der landwirtschaftlichen Arbeitsaufgabe 27 ist ein Anbaugerät 2 an die autonome Arbeitsmaschine 1 adaptiert, im dargestellten Ausführungsbeispiel ein Grubber.

Zum Anschließen des Anbaugerätes 2 weist die autonome Arbeitsmaschine 1 zumindest eine Adaptionsvorrichtung 3 auf. Die zumindest eine Adaptionsvorrichtung 3 kann als hydraulischer Kraftheber 10 und/oder als Zapfwelle ausgeführt sein. Die autonome Arbeitsmaschine 1 weist eine Sensoreinrichtung 4 auf, die dazu eingerichtet ist, Daten der autonomen Arbeitsmaschine 1 und des angeschlossenen Anbaugerätes 2, die Betriebsparameter der autonomen Arbeitsmaschine 1 und/oder des Anbaugerätes 2 umfassen, zu ermitteln. Die von der Sensoreinrichtung 4 ermittelten Daten werden einer Steuerungsvorrichtung 5 bereitgestellten, die zur Auswertung der von der Sensoreinrichtung 4 ermittelten Daten eingerichtet ist. Die Steuerungsvorrichtung 5 umfasst eine Recheneinheit 6 sowie eine Speichereinheit 7. Die Steuerungsvorrichtung 5 ist mit einer entfernten Anzeigevorrichtung 8 verbunden. Die Anzeigevorrichtung 8 kann stationär oder mobil ausgeführt sein. An der autonomen Arbeitsmaschine 1 sowie an dem Anbaugerät 2 sind an verschiedenen Positionen Sensoren 24 der Sensoreinrichtung 4 angeordnet. Die dargestellten Positionen der Sensoren 24 sind lediglich beispielhaft zu verstehen und können sich aufgrund der für einzelne Sensoren 24 jeweils verwendeten Sensortechnologie von der dargestellten Anordnung unterscheiden.

Die zumindest eine von der autonomen Arbeitsmaschine 1 auszuführende Arbeitsaufgabe 27 kann von einem Bediener 28 durch eine Benutzerschnittstelle 26 an die Steuerungsvorrichtung 5 übermittelt werden. Bevorzugt kann die Benutzerschnittstelle 26 die Anzeigevorrichtung 8 umfassen.

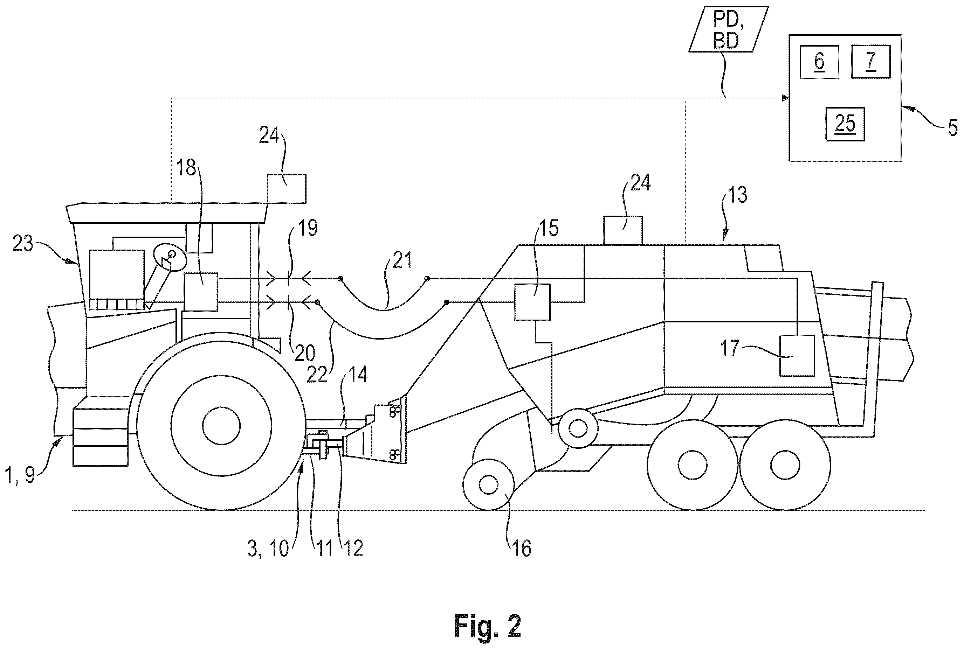

In Fig. 2 ist eine als Traktor 9 ausgebildete autonome Arbeitsmaschine 1 dargestellt. Der Traktor 9 nimmt in seinem Heckbereich an heb- und senkbaren Unterlenkern 11 einer als hydraulischer Kraftheber 10 ausgeführten Adaptionsvorrichtung 3 eine Deichsel 12 einer als Ballenpresse 13 ausgeführten Anbaugerätes 2 auf. Die Ballenpresse 13 wird mittels einer Gelenkwelle 14 als eine Adaptionsvorrichtung 3 von einer nicht näher dargestellten Zapfwelle des Traktors 9 angetrieben und weist unter anderem eine über eine hydraulische Verstelleinrichtung 15 einstellbare Pick-up 16 sowie einen über eine weitere Verstelleinrichtung 17 einstellbaren im Einzelnen nicht dargestellten Förderkanal für ein Erntegut auf. Eine hydraulische Steuereinrichtung 18 ist mit einer Druckmittelquelle verbunden und besteht vorzugsweise aus einem Block von mehreren hydraulischen Wegeventilen, die elektromagnetisch vorgesteuert sind. Der Traktor 9 ist in seinem Heckbereich, also im Bereich seines Krafthebers 10, mit mehreren Kuppelelementen versehen, von denen im vorliegenden Fall zwei als Remoteanschlüsse ausgebildete Kuppelelemente 19 und 20 über Paare von als Druckmittelschläuche ausgebildeten Anschlussleitungen 21 und 22 jeweils mit den vorgenannten hydraulischen Verstelleinrichtungen 15 und 17 verbunden sind. Die Kuppelelemente 19 und 20 bilden eine weitere Adaptionsvorrichtung 3 der autonomen Arbeitsmaschine 1 respektive des Traktors 9.

Die zumindest eine Adaptionsvorrichtung 3 kann, neben der Ausführung beispielsweise als hydraulischer Kraftheber 10, der Zapfwelle sowie der Gelenkwelle 14, weiterhin Anschlüsse umfassen oder als solche ausgebildet sein, die als Hydraulikanschlüsse, Pneumatikanschlüsse, Elektroanschlüsse und/oder Kommunikationsanschlüsse ausgeführt sind.

Die zumindest eine Adaptionsvorrichtung 3 kann somit zum mechanischen, elektrischen, elektromechanischen, pneumatischen, hydraulischen und/oder kommunikativen Anschluss des Anbaugerätes 2 an die autonome Arbeitsmaschine 1 ausgeführt und eingerichtet sein. Insbesondere können mehrere unterschiedliche Adaptionsvorrichtung 3 vorgesehen sein, die dem Anschluss des Anbaugerätes 2 an die autonome Arbeitsmaschine 1 dienen.

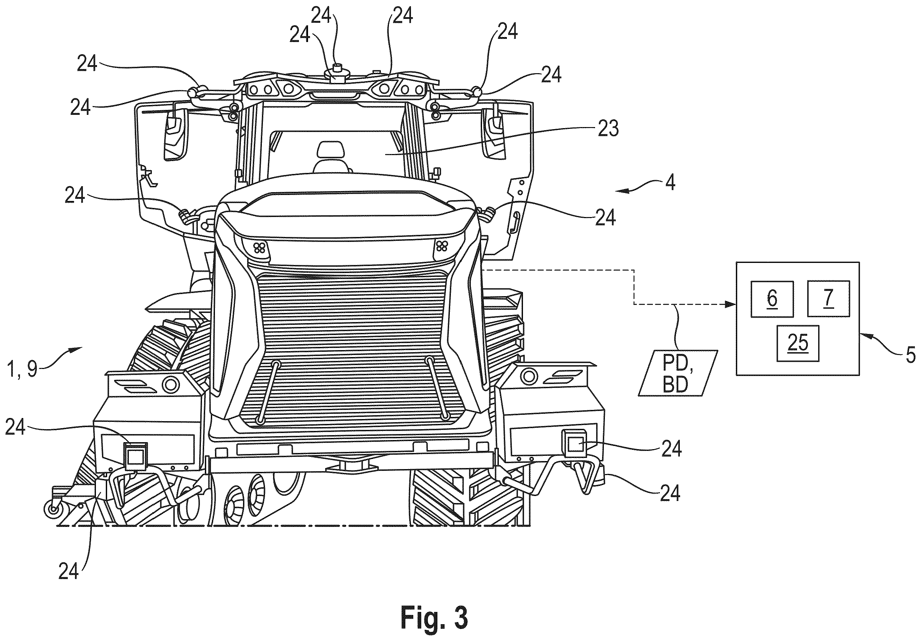

Fig. 3 zeigt schematisch und exemplarisch eine Darstellung eines Frontbereichs einer Kabine 23 der autonomen Arbeitsmaschine 1 gemäß Fig. 2 mit mehreren Sensoren 24 der Sensoreinrichtung 4. Weitere Sensoren 24 sind im Heckbereich der Kabine 23 angeordnet, wie exemplarisch in Fig. 2 angedeutet.

Die Steuerungsvorrichtung 5 weist eine Funktionskontrolleinheit 25 auf, welche dazu eingerichtet ist, einen jeweiligen Betriebszustand der autonomen Arbeitsmaschine 1 und/oder des Anbaugerätes 3 vor, während und nach einer Durchführung einer landwirtschaftlichen Arbeitsaufgabe 27 zu kontrollieren, wobei die Bestimmung des jeweiligen Betriebszustands auf einer Auswertung von Zustandsinformationen erfolgt, welche auf einer Analyse der von der Sensoreinrichtung 4 bereitgestellten Daten vor, während und nach der Durchführung der landwirtschaftlichen Arbeitsaufgabe 27 basiert.

Die Funktionskontrolleinheit 25 ist dazu eingerichtet, bei der Bestimmung des jeweiligen Betriebszustands Umgebungsdaten UD als Zustandsinformationen aus einer externen Datenquelle 29 abzurufen und zu berücksichtigen. Umgebungsdaten UD sind unter anderem Wetterdaten, wie Niederschlagsmenge, Windrichtung und Windgeschwindigkeit, und/oder Daten zu Bodenverhältnissen, topografische Daten, wie Geländeneigung.

Die von der Sensoreinrichtung 4 bereitgestellten Daten umfassen physikalische Daten PD und Bilddaten BD. Die physikalischen Daten PD können aus der Gruppe Akustikdaten, Schwingungsdaten und/oder Drehmomentdaten, Druckdaten, Durchsatzdaten, Neigungswinkeldaten und/oder Bewegungsdaten der Arbeitsmaschine 1, der zumindest einen Adaptionsvorrichtung 3 und/oder des Anbaugerätes 2 sein, zu deren Erfassung ein Teil der Sensoren 24 der Sensoreinrichtung 4 eingerichtet und ausgeführt ist. Sensorisch ermittelte Durchsatzdaten können sich beispielsweise auf Erntegutdurchsätze, Verbrauchsmengen von Betriebsstoffen und/oder Hilfsstoffen oder dergleichen mehr beziehen.

Die Bilddaten BD können Aufnahmen der Arbeitsmaschine 1, der zumindest einen Adaptionsvorrichtung 3, des angeschlossenen Anbaugerätes 2 sowie der Umgebung umfassen, welche ein Teil der Sensoren 24 der Sensoreinrichtung 4 vor, während und nach der Bearbeitung durch die autonome Arbeitsmaschine 1 generiert. Hierzu kann die Sensoreinrichtung 4 zumindest eine Kamera umfassen, die zur Generierung von Bilddaten BD der Arbeitsmaschine 1, der zumindest einen Adaptionsvorrichtung 3, des angeschlossenen Anbaugerätes 2 sowie der Umgebung ausgeführt und eingerichtet ist. Vorzugsweise umfasst die Sensoreinrichtung 4 mehrere Kameras.

Mittels der Funktionskontrolleinheit 25 wird eine erweiterte Überwachungsfunktion der autonomen Arbeitsmaschine 1, des daran adaptierten Anbaugerätes 2 sowie der zumindest einen Adaptionsvorrichtung 3 erreicht, welche die Zeiträume vor, während und nach der Durchführung der landwirtschaftlichen Arbeitsaufgabe 27 abdeckt.

Die Funktionskontrolleinheit 25 ist dazu eingerichtet ist, vor der Durchführung einer landwirtschaftlichen Arbeitsaufgabe 27 eine Funktionsprüfung der Sensoren 24, der Arbeitsmaschine 1, der zumindest einen Adaptionsvorrichtung 3 und des Anbaugerätes 2 und/oder eine Überprüfung der Anschlusssituation des Anbaugerätes 2 an die zumindest eine Adaptionsvorrichtung 3 durchzuführen. Hierzu kann die Funktionskontrolleinheit 25 dazu eingerichtet und programmiert sein, Statusabfragen an die Sensoren 24, an Arbeitsaggregate und/oder an eine oder mehrere Steuereinheiten der Arbeitsmaschine 1, der zumindest einen Adaptionsvorrichtung 3 und/oder des Anbaugerätes 2 zu senden. Statusabfragen können von der Funktionskontrolleinheit 25 drahtgebunden über ein Bussystem und/oder drahtlos übertragen werden.

Beispielsweise kann die Funktionskontrolleinheit 25 Statusabfragen an die hydraulische Steuereinrichtung 18 als eine Steuereinheit der Arbeitsmaschine 1 übermitteln, um einerseits deren Funktionsbereitschaft zu überprüfen. Andererseits kann die Funktionskontrolleinheit 25 Statusabfragen an die hydraulische Steuereinrichtung 18 übermitteln, um beispielsweise die Belegung der Anschlussleitungen 21 und 22 an den Kuppelelementen 19 und 20 zu überprüfen.

In entsprechender Weise kann die Funktionskontrolleinheit 25 Statusabfragen an die verschiedenen Sensoren 24 der Sensoreinrichtung 4 übermitteln, um deren Funktionsbereitschaft zu überprüfen.

Weiterhin ist die Funktionskontrolleinheit 25 dazu eingerichtet und programmiert, eine Funktionsprüfung von Anschlüssen der zumindest einen Adaptionsvorrichtung 3, die als Hydraulikanschlüsse, Pneumatikanschlüsse, Elektroanschlüsse und/oder Kommunikationsanschlüsse ausgeführt sind, nach dem Anschluss des Anbaugerätes 2 an die Adaptionsvorrichtung 3 durchzuführen. Dabei erfolgt die Funktionsprüfung insbesondere unmittelbar nach dem Anschluss des Anbaugerätes 2 an die Adaptionsvorrichtung 3, um eventuelle Fehlbelegungen vor der Aufnahme der Durchführung der Arbeitsaufgabe 27 detektieren zu können.

Während der Durchführung einer landwirtschaftlichen Arbeitsaufgabe 27 wird die Einhaltung der Betriebsposition des Anbaugerätes 2 und von am Anbaugerät 2 angeordneten Komponenten kontrolliert und/oder eine Kontrolle der Bedienreihenfolge des Anbaugerätes 2 und der am Anbaugerät 2 angeordneten Komponenten durch die Funktionskontrolleinheit 25 durchgeführt.

Hierzu kann die Funktionskontrolleinheit 25 dazu eingerichtet und programmiert sein, die Betriebsposition und/oder Bedienreihenfolge durch einen Abgleich mit in der Speichereinheit 7 hinterlegten Bildern und/oder Videosequenzen, die eine Soll-Bedienposition und/oder eine Soll- Bedienreihenfolge wiedergeben, zu kontrollieren.

Bevorzugt kann die Funktionskontrolleinheit 25 ein Bildauswertungsmodul umfassen, welches dazu eingerichtet ist, die Bilddaten BD mittels eines Maschinenlernalgorithmus zu analysieren. Bevorzugt kann der Maschinenlernalgorithmus zumindest ein trainierbares neuronales Netzwerk zur Analyse der Bilddaten BD umfassen. Dies ist vorteilhaft, wenn die Betriebsposition und/oder die Bedienreihenfolge durch einen Abgleich mit in der Speichereinheit 7 hinterlegten Bildern und/oder Videosequenzen kontrolliert wird bzw. werden.

Weiterhin ist die Funktionskontrolleinheit 25 dazu eingerichtet, nach Abschluss der Durchführung der landwirtschaftlichen Arbeitsaufgabe 27 die Überführung der autonomen landwirtschaftlichen Arbeitsmaschine 1 in einen sicheren Betriebszustand und die Einhaltung des eingenommenen sicheren Betriebszustands zu überwachen. Auch die Überführung in den sicheren Betriebszustand und dessen Einhaltung kann durch einen Abgleich mit in der Speichereinheit 7 hinterlegten Bildern und/oder Videosequenzen, die den einzunehmenden sicheren Soll-Betriebszustand zeigen, kontrolliert werden.

Tritt vor, während oder nach der Durchführung der landwirtschaftlichen Arbeitsaufgabe 27 ein fehlerhafter oder irregulärer Betriebszustand auf, welcher zu einer Verhinderung der Aufnahme der Durchführung der landwirtschaftlichen Arbeitsaufgabe 27, einer Unterbrechung während der Durchführung der landwirtschaftlichen Arbeitsaufgabe 27 oder einer unsicheren Betriebssituation nach der Durchführung der landwirtschaftlichen Arbeitsaufgabe 27 führt, so ist die Funktionskontrolleinheit 25 dazu eingerichtet, betriebszustandsabhängig Warnhinweise auszugeben. Die Ausgabe der Warnhinweise erfolgt mittels der Anzeigevorrichtung 8.

Die Funktionskontrolleinheit 25 kann des Weiteren dazu eingerichtet sein, betriebszustandsunabhängig Wartungshinweise auszugeben, die auf der Auswertung der Zustandsinformationen basieren. Die Wartungshinweise sind als Empfehlungen zu verstehen, um die Einsatzfähigkeit der Arbeitsmaschine 1, der zumindest einen Adaptionsvorrichtung 3 und/oder des Anbaugerätes 2 langfristig zu erhalten Die Ausgabe der Wartungshinweise erfolgt ebenfalls mittels der Anzeigevorrichtung 8.

Weiterhin kann die Funktionskontrolleinheit 25 dazu eingerichtet sein, betriebszustandsunabhängig Ablauffortschritte zu überwachen und zu dokumentieren.

### Bezugszeichenliste

- 1: Autonome Arbeitsmaschine
- 2: Anbaugerät
- 3: Adaptionsvorrichtung
- 4: Sensoreinrichtung
- 5: Steuerungsvorrichtung
- 6: Recheneinheit
- 7: Speichereinheit
- 8: Anzeigevorrichtung
- 9: Traktor
- 10: Kraftheber
- 11: Unterlenker
- 12: Deichsel
- 13: Ballenpresse
- 14: Gelenkwelle
- 15: Verstelleinrichtung
- 16: Pick-up
- 17: Verstelleinrichtung
- 18: Steuereinrichtung
- 19: Kuppelelement
- 20: Kuppelelement
- 21: Anschlussleitung
- 22: Anschlussleitung
- 23: Kabine
- 24: Sensor
- 25: Funktionskontrolleinheit
- 26: Benutzerschnittstelle
- 27: Arbeitsaufgabe
- 28: Bediener
- 29: Datenquelle

- BD: Bilddaten
- PD: Physikalische Daten
- UD: Umgebungsdaten

## Patentansprüche

1. Autonome landwirtschaftliche Arbeitsmaschine (1) mit zumindest einer Adaptionsvorrichtung (3) zum Anschließen eines Anbaugerätes (2) an die Arbeitsmaschine (1) sowie mit einer mehrere Sensoren (24) umfassenden Sensoreinrichtung (4), die dazu eingerichtet ist, Daten (BD, PD) der autonomen Arbeitsmaschine (1) und des angeschlossenen Anbaugerätes (2), die Betriebsparameter der autonomen Arbeitsmaschine (1) und/oder des Anbaugerätes (2) umfassen, zu ermitteln und die Daten (BD, PD) einer Steuerungsvorrichtung (5) bereitzustellten, die zur Auswertung der von der Sensoreinrichtung (4) ermittelten Daten (BD, PD) eingerichtet ist, **dadurch gekennzeichnet, dass** die Steuerungsvorrichtung (5) eine Funktionskontrolleinheit (25) aufweist, welche dazu eingerichtet ist, einen jeweiligen Betriebszustand der autonomen Arbeitsmaschine (1) und/oder des Anbaugerätes (2) vor, während und nach einer Durchführung einer landwirtschaftlichen Arbeitsaufgabe (27) zu kontrollieren, wobei die Bestimmung des jeweiligen Betriebszustands auf einer Auswertung von Zustandsinformationen erfolgt, welche auf einer Analyse der von der Sensoreinrichtung (4) bereitgestellten Daten (BD, PD) vor, während und nach der Durchführung der landwirtschaftlichen Arbeitsaufgabe (27) basiert.

2. Autonome landwirtschaftliche Arbeitsmaschine (1) nach Anspruch 1, **dadurch gekennzeichnet, dass** die Funktionskontrolleinheit (25) dazu eingerichtet ist, bei der Bestimmung des jeweiligen Betriebszustands Umgebungsdaten (UD) als Zustandsinformationen aus einer externen Datenquelle (29) abzurufen und zu berücksichtigen.

3. Autonome landwirtschaftliche Arbeitsmaschine (1) nach Anspruch 1 oder 2, **dadurch gekennzeichnet, dass** die von der Sensoreinrichtung (4) bereitgestellten Daten physikalische Daten (PD) und Bilddaten (BD) umfassen, die vor, während und nach der Durchführung der Arbeitsaufgabe (27) generiert werden.

4. Autonome landwirtschaftliche Arbeitsmaschine (1) nach Anspruch 3, **dadurch gekennzeichnet, dass** die physikalischen Daten (PD) aus der Gruppe Akustikdaten, Schwingungsdaten und/oder Drehmomentdaten, Durchsatzdaten, Druckdaten, Neigungswinkeldaten und/oder Bewegungsdaten sind, zu deren Erfassung ein Teil der Sensoren (24) der Sensoreinrichtung (4) eingerichtet und ausgeführt ist.

5. Autonome landwirtschaftliche Arbeitsmaschine (1) nach Anspruch 3 oder 4, **dadurch gekennzeichnet, dass** die Bilddaten (BD) Aufnahmen der Arbeitsmaschine (1), der zumindest einen Adaptionsvorrichtung (3), des angeschlossenen Anbaugerätes (2) sowie der Umgebung umfassen, welche ein Teil der Sensoren (24) der Sensoreinrichtung (4) vor, während und nach der Durchführung der Arbeitsaufgabe durch die Arbeitsmaschine (1) generiert.

6. Autonome landwirtschaftliche Arbeitsmaschine (1) nach einem der vorangehenden Ansprüche, **dadurch gekennzeichnet, dass** die Funktionskontrolleinheit (25) dazu eingerichtet ist, vor der Durchführung der landwirtschaftlichen Arbeitsaufgabe (27) eine Funktionsprüfung der Sensoren (24), der Arbeitsmaschine (1), der zumindest einen Adaptionsvorrichtung (3) und des Anbaugerätes (2) und/oder eine Überprüfung der Anschlusssituation des Anbaugerätes (2) an die zumindest eine Adaptionsvorrichtung (3) durchzuführen.

7. Autonome landwirtschaftliche Arbeitsmaschine (1) nach Anspruch 6, **dadurch gekennzeichnet, dass** die Funktionskontrolleinheit (25) dazu eingerichtet ist, eine Funktionsprüfung von Anschlüssen der zumindest einen Adaptionsvorrichtung (3), die als Hydraulikanschlüsse, Pneumatikanschlüsse, Elektroanschlüsse und/oder Kommunikationsanschlüsse ausgeführt sind, nach dem Anschluss des Anbaugerätes (2) an die zumindest eine Adaptionsvorrichtung (3) durchzuführen.

8. Autonome landwirtschaftliche Arbeitsmaschine (1) nach einem der vorangehenden Ansprüche, **dadurch gekennzeichnet, dass** die Funktionskontrolleinheit (25) dazu eingerichtet ist, während der Durchführung der landwirtschaftlichen Arbeitsaufgabe (27) die Einhaltung einer Betriebsposition des Anbaugerätes (2) und von am Anbaugerät (2) angeordneten Komponenten zu kontrollieren und/oder eine Kontrolle einer Bedienreihenfolge des Anbaugerätes (2) und der am Anbaugerät (2) angeordneten Komponenten durchzuführen.

9. Autonome landwirtschaftliche Arbeitsmaschine (1) nach Anspruch 8, **dadurch gekennzeichnet, dass** die Funktionskontrolleinheit (25) dazu eingerichtet ist, die Betriebsposition und/oder die Bedienreihenfolge durch einen Abgleich mit in einer Speichereinheit (7) hinterlegten Bildern und/oder Videosequenzen zu kontrollieren.

10. Autonome landwirtschaftliche Arbeitsmaschine (1) nach einem der vorangehenden Ansprüche, **dadurch gekennzeichnet, dass** die Funktionskontrolleinheit (25) dazu eingerichtet ist, nach Beendigung der Durchführung der landwirtschaftlichen Arbeitsaufgabe (27) die Überführung der autonomen landwirtschaftlichen Arbeitsmaschine (1) in einen sicheren Betriebszustand und die Einhaltung des sicheren Betriebszustands zu überwachen.

11. Autonome landwirtschaftliche Arbeitsmaschine (1) nach Anspruch 10, **dadurch gekennzeichnet, dass** die Funktionskontrolleinheit (25) dazu eingerichtet ist, die Arbeitsmaschine (1) anzusteuern, um diese in eine Serviceposition oder eine Abholposition auf oder am Rand einer bearbeiteten oder zu bearbeitenden Fläche als sicherer Betriebszustand zu überführen.

12. Autonome landwirtschaftliche Arbeitsmaschine (1) nach einem der vorangehenden Ansprüche, **dadurch gekennzeichnet, dass** die Funktionskontrolleinheit (25) dazu eingerichtet ist, betriebszustandsabhängig Warnhinweise auszugeben.

13. Autonome landwirtschaftliche Arbeitsmaschine (1) nach einem der vorangehenden Ansprüche, **dadurch gekennzeichnet, dass** die Funktionskontrolleinheit (25) dazu eingerichtet ist, betriebszustandsunabhängig Wartungshinweise auszugeben, die auf der Auswertung der Zustandsinformationen basieren.

14. Autonome landwirtschaftliche Arbeitsmaschine (1) nach einem der vorangehenden Ansprüche, **dadurch gekennzeichnet, dass** die Funktionskontrolleinheit (25) dazu eingerichtet ist, betriebszustandsunabhängig Ablauffortschritte zu überwachen und zu dokumentieren.

15. Autonome landwirtschaftliche Arbeitsmaschine (1) nach einem der vorangehenden Ansprüche, **dadurch gekennzeichnet, dass** die Funktionskontrolleinheit (25) ein Bildauswertungsmodul umfasst, welches dazu eingerichtet ist, die Bilddaten (BD) mittels eines Maschinenlernalgorithmus zu analysieren.
